Europäisches Patentamt

European Patent Office

Office européen des brevets·

(19)

(11) Veröffentlichungsnummer: **0 385 113**
**A2**

(12) **EUROPÄISCHE PATENTANMELDUNG**

(21) Anmeldenummer: **90101663.4**

(22) Anmeldetag: **27.01.90**

(51) Int. Cl.5: **B01D 27/08**

(30) Priorität: **02.03.89 DE 3906550**

(43) Veröffentlichungstag der Anmeldung:
**05.09.90 Patentblatt 90/36**

(84) Benannte Vertragsstaaten:
**DE ES FR GB IT**

(71) Anmelder: **ROBERT BOSCH GMBH**
**Postfach 10 60 50**
**D-7000 Stuttgart 10(DE)**

(72) Erfinder: **Bosch, Franz-Ulrich, Dipl.-Ing.**
**Eduard-Steinle-Strasse**
**D-7000 Stuttgart 75(DE)**
Erfinder: **Müller, Willi**
**Wiesenstrasse 38**
**D-7247 Sulz-Sigmarswangen(DE)**
Erfinder: **Eblen, Ewald. Dipl.-Ing., Dr.**
**Fridinger Strasse 53**
**D-7000 Stuttgart 75(DE)**

(54) **Flüssigkeitsfilter.**

(57) Es wird ein Flüssigkeitsfilter (10) in Leitungsfilterbauart vorgeschlagen, bei dessem Gehäuse (11) ein becherförmiges Gehäuseteil (12) mit einem Deckel (13) durch ein leicht lösbares Spannband (25) aneinander befestigt sind und das Gehäuse in seinem Innern einen Filtereinsatz (15) aufnimmt, der infolge radial wirkender Dichtstellen (32, 34, 54) axial spannungsfrei gehalten ist. Der Filtereinsatz (15) ist einfach und umweltfreundlich entsorgbar.

FIG.1

EP 0 385 113 A2

## Flüssigkeitsfilter

### Stand der Technik

Die Erfindung geht aus von einem Flüssigkeitsfilter nach der Gattung des Hauptanspruchs.

Es ist schon ein solches Flüssigkeitsfilter aus der EP-0 044 539B1 bekannt, bei dem an einem die Anschlüsse für Zulauf und Ablauf aufweisenden Gehäuse-Deckel ein becherförmiges Gehäuseteil mit Hilfe eines Gewinderinges lösbar befestigt ist und das Gehäuse in seinem Innern als Filterelement einen radial durchströmten Filterstern aufweist. Für die Abdichtung des Innenraumes nach außen ist zwischen den Rändern von Deckel und Gehäuseteil eine O-Ring-Dichtung vorgesehen, während eine zweite O-Ring-Dichtung zur Abgrenzung von Schmutzseite und Reinseite zwischen Filterelement und Deckel angeordnet ist. Diese Filterbauart ermöglich zwar einen umweltfreundlichen Betrieb, weil ein verbrauchter Filtereinsatz für sich allein ausgetauscht werden kann. An den Deckel herangeführte Leitungen brauchen beim Wechseln des Filterelements nicht demontiert zu werden, wodurch Störeinflüsse bei der Handhabung und im Betrieb des Filters verringert werden. Von Nachteil bei diesem Flüssigkeitsfilter ist jedoch, daß die Schraubverbindung zu einer relativ aufwendigen und teueren Befestigung des becherförmigen Gehäuseteils führt. Zudem ist der Aufwand für den Deckel groß und verhindert eine kompakte Bauweise des Filters. Weiterhin weist das Flüssigkeitsfilter einen radial durchströmten Sterneinsatz auf, der zudem in axialer Richtung von einer Feder belastet wird und damit axial verspannt ist. Ungünstig ist ferner, daß die äußere O-Ring-Abdichtung im Klemmbereich des Gewinderinges liegt, wodurch Probleme bei der Abdichtung vom Gehäuseinneren nach außen auftreten kön- nen.

Ferner ist aus der EP 0-166 160 A1 ein Flüssigkeitsfilter bekannt, bei dem als Gehäuse ein die Anschlüsse aufweisender Deckel mit einem becherförmigen Gehäuseteil verschweißt ist. Im Gehäuse ist als Filterelement ein axial durchströmter Wickeleinsatz angeordnet, der zudem an seinen Stirnseiten axial eingespannt ist. Von Nachteil bei diesem Flüssigkeitsfilter ist, daß hier das Wickelelement nicht allein ausgetauscht werden kann, sondern das gesamte Filter als Wegwerfteil behandelt wird. Dies ist besonders dann ungünstig, wenn im Filter zusätzlich Aufschaltgruppen eingebaut sind, wie dies hier die zusätzliche Einrichtung für eine Kraftstoffrückführung darstellt, die im Deckel integriert ist. Das Austauschen des gesamten Flüssigkeitsfilters erfordert die erneute Montage der Anschlußleitungen, wobei neben Dichtheitsproblemen an den Anschlüssen und Verwechseln der Anschlußleitungen auch zusätzliche Kosten für Befestigungsmittel erforderlich werden.

### Vorteile der Erfindung

Das erfindungsgemäße Flüssigkeitsfilter mit den kennzeichnenden Merkmalen des Hauptanspruchs hat demgegenüber den Vorteil, daß es eine kompakte und billige Bauart ermöglicht, bei der das Filterelement für sich allein leicht austauschbar angeordnet ist. Dabei läßt sich das Filterelement ohne axiale Verspannung im Gehäuseinneren einbauen. Die Abdichtung baut einfach und erfüllt die Anforderungen an einen sicheren Betrieb. Zudem eignet sich das Flüssigkeitsfilter zum Einbau unterschiedlicher Filterelemente, die sowohl als Sternelement oder als Wickelelement ausgebildet sein können.

Durch die in den Unteransprüchen aufgeführten Maßnahmen sind vorteilhafte Weiterbildungen und Verbesserungen des im Hauptanspruch angegebenen Flüssigkeitsfilters möglich. Eine besonders kostengünstige und leicht handhabbare Lösung ergibt sich bei einer Ausführung gemäß Anspruch 2, wobei handelsübliche Spannverschlüsse verwendbar sind. Eine besonders einfache und stabile Spannbefestigung ergibt sich bei einer Ausführung nach Anspruch 3, wobei die bisherigen becherförmigen Gehäuseteile, wie sie für eine Bördelverbindung verwendet werden, weiterhin verwendbar sind. Bei einer Ausführung nach Anspruch 4 ergibt sich eine besonders platzsparende Bauweise des Deckels, die sich zudem zum Einbau zusätzlicher Aufschaltgruppen eignet, wie dies näher Anspruch 5 vorschlägt. Eine besonders vorteilhafte Ausgestaltung ergibt sich, wenn gemäß Anspruch 6 das Filterelement als Wickelelement ausgebildet wird, das ohne axiale Verspannung im Gehäuseinneren angeordnet werden kann. Dabei ist es besonders günstig, wenn das Wickelelement gemäß Anspruch 7 als weitgehend geschlossene Einheit ausgebildet wird, wodurch sich seine Handhabung und seine Einsatzmöglichkeiten verbessern. Weiterhin ist es günstig, bei einer Ausbildung mit Wasserspeicherraum im Flüssigkeitsfilter durch eine Ausbildung nach Anspruch 8 eine axiale Verspannung im Filterelement zu vermeiden und für eine wirksame, billige Abdichtung zu sorgen, vor allem wenn diese an einem kleinen Durchmesser im Bereich des Ablaßstutzens durchgeführt wird. Die Bauweise des Flüssigkeitsfilters eignet sich zur Verwendung von Kunststoff für den Deckel, was einer kostengünstigen Bauweise zugute kommt. Für die Güte und die Qualität der Abdichtung des Gehäuseinneren nach außen ist es zweckmäßig, wenn diese Abdichtung gemäß Anspruch 10 durchgeführt wird. Weitere vorteilhafte Ausgestaltungen ergeben sich aus der Beschreibung der Zeichnung.

Zeichnung

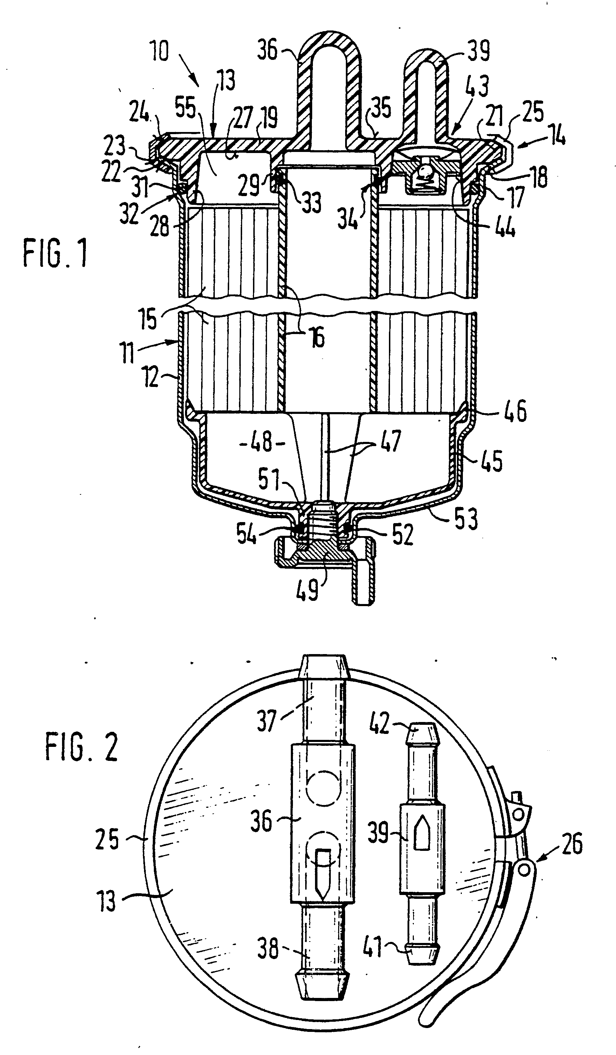

Ein Ausführungsbeispiel der Erfindung ist in der Zeichnung dargestellt und in der nachfolgenden Beschreibung näher erläutert. Es zeigen Figur 1 einen Längsschnitt durch ein erfindungsgemäßes Flüssigkeitsfilter und Figur 2 eine Draufsicht auf das Filter nach Figur 1.

Beschreibung des Ausführungsbeispiels

Die Figur 1 zeigt einen Längsschnitt durch ein Flüssigkeitsfilter 10 für Dieselkraftstoff, das als Leitungsfilter zum Anschließen von Schlauchleitungen ausgebildet ist. Das Flüssigkeitsfilter 10 hat ein Gehäuse 11, das aus einem becherförmigen, metallischen Gehäuseteil 12 und einem Deckel 13 besteht, die durch eine Befestigungseinrichtung 14 lösbar miteinander verbunden sind.

Das becherförmige Gehäuseteil 12 nimmt in seinem Innern als Filterelement ein axial durchströmtes Wickelelement 15 auf, dessen Filterpapierbahn spiralig um ein Mittelrohr 16 aufgewickelt ist. Das Gehäuseteil 12 ist in seinem Durchmesser mehrfach abgesetzt und weist nahe seinem offenen Ende einen erweiterten, zylindrischen Abschnitt 17 auf, der zur Führung des Deckels 13 im Gehäuseteil 12 und zur Abdichtung nach außen hin dient und der in einem schräg nach außen ragenden, ringförmig verlaufenden Wulst 18 endet, der ein Teil der Befestigungseinrichtung 14 bildet.

In das offene Ende des Gehäuseteils 12 ist der Deckel 13 eingesetzt, der eine möglichst flache Bauweise aufweist. Der Deckel 13 hat eine im wesentlichen scheibenförmige, ebene Deckplatte 19, die an ihrem Außenumfang einen ringförmig verlaufenden, im Querschnitt kegelförmig ausgebildeten Wulst 21 aufweist, der mit seiner schräg verlaufenden Unterseite 22 auf dem Wulst 18 des becherförmigen Gehäuse teils 12 aufliegt. Die aneinanderliegenden Wulste 18, 21 bilden außen jeweils schräge Begrenzungsflächen 23, 24 an denen sie von einem im Querschnitt im wesentlichen V-förmigen Spannband 25 umfaßt werden. Das Spannband 25 ist Teil der Befestigungseinrichtung 14 und weist einen Schnellverschluß 26 auf, wie dies Figur 2 näher zeigt. Die Befestigungseinrichtung 14 ist damit in vorteilhafter Weise so ausgebildet, daß sie ein auf dem Markt befindliches, handelsübliches und damit billiges Spannband 25 verwenden kann.

Die Deckplatte 19 weist auf ihrer dem Wickelelement 15 zugewandten Innenseite 27 zwei hülsenförmige, konzentrisch zueinander angeordnete Ringstege 28, 29 auf. Mit dem äußeren Ringsteg 28 ist der Deckel 13 im Gehäuseteil 12 zentriert; zudem trägt er außen einen O-Ring 31 und bildet damit eine erste, radial wirkende Dichtstelle 32, welche das Gehäuseinnere nach außen abdichtet. Der im Durchmesser kleinere, innere Ringsteg 29 umfaßt das zylindrische Ende des Mittelrohrs 16 und bildet mit Hilfe eines O-Ringes 33 eine zweite Dichtstelle 34, welche im Innern des Gehäuses 11 die Schmutzseite von der Reinseite trennt. Auch die zweite Dichtstelle 34 wirkt in radialer Richtung.

Die Deckplatte 19 hat auf ihrer Außenseite 35 eine zentrisch angeordnete, domförmige Erhebung 36, an der ein Zulauf-Anschluß 37 sowie ein Ablauf-Anschluß 38 ausgebildet sind, die beide als Schlauchanschlußstutzen ausgeführt sind und koaxial zueinander liegen.

Wie die Figur 1 in Verbindung mit Figur 2 näher zeigt, ist an der Außenseite 35 des Deckels 13 versetzt zur ersten Erhebung 36 eine zweite Erhebung 39 ausgebildet, die einen Einlaßstutzen 41 sowie einen koaxial dazu liegenden Auslaßstutzen 42 aufweist. Am Einlaßstutzen 41 wird dem Flüssigkeitsfilter 10 die von einer Einspritzpumpe kommende Überströmmenge zugeführt und gelangt zu einer in den Deckel 13 integrierten Einrichtung 43 zur Kraftstoffrückführung. Diese Einrichtung 43 ist in einer kreisförmigen Aussparung 44 ange ordnet, die im Bereich zwischen den beiden Ringstegen 28 und 29 liegt. Der schaltungstechnische Aufbau dieser Einrichtung 43 zur Kraftstoffrückführung ist aus der EP-0 166 160 A1 bekannt, auf die hier Bezug genommen wird. Über den Auslaßstutzen 42 kann Druckmittel zum Tank abfließen.

Das Wickelelement 15 ist hier in vorteilhafter Weise als eine im wesentlichen geschlossene Einheit ausgebildet, indem es an seiner Unterseite durch eine Abdeckkappe 45 verschlossen ist. Dazu ist die äußerste Papierwindung des Wickelelements 15 in einen Rand 46 der Abdeckkappe 45 eingeschmolzen, sodaß eine dichte und feste Verbindung entsteht. Die Abdeckkappe 45 bildet einen von Stegen 47 durchsetzten Wasserspeicherraum 48, der über eine Ablaßschraube 49 nach außen entleerbar ist. Die Ablaßschraube 49 sitzt in einem Gewindestutzen 51, der am unteren Ende der Abdeckkappe 45 ausgebildet ist und der in eine topfförmige Ausformung 52 am Boden 53 des becherförmigen Gehäuseteils 12 ragt. In dieser Ausformung 52 bildet der Gewindestutzen 51 mit Hilfe eines O-Ringes 54 eine 3. Dichtstelle, bei der die Dichtwirkung ebenfalls radial erfolgt.

Die Wirkungsweise des Flüssigkeitsfilters 10 ist wie folgt: Der zu reinigende Kraftstoff gelangt über den Zulauf-Anschluß 37 auf die Schmutzseite 55 im Deckel 13. Von dort strömt er axial durch das Wickelelement 15 und gelangt gereinigt in den Wasserspeicherraum 48, durchströmt das hohle Mittelrohr 16 nach oben und strömt über den Ablauf-Anschluß 38 ab. Die von einer Einspritzpumpe kommende, erhitzte Überströmmenge fließt über den Einlaßstutzen 41 zu der Einrichtung 43 für die Kraftstoffrückführung und wird abhängig von der jeweiligen Temperatur zur Schmutzseite 55 oder über den Auslaßstutzen 42 zum Tank geleitet.

Das Flüssigkeitsfilter 10 ist besonders leicht handhabbar und erlaubt ein umweltfreundliches Auswechseln des Filtereinsatzes 15. Mit Hilfe des Schnellverschlusses 26 läßt sich das Spannband 25 leicht lösen, wonach das becherförmige Gehäuseteil 12 vom Deckel 13 leicht abnehmbar ist und das verschmutzte Wickelelement 15 ausgetauscht werden kann. Durch die jeweils radial wirkenden Dichtstellen 32, 33 und 54 ist dafür gesorgt, daß auf den Filtereinsatz 15 keine axialen Spannungen übertragen werden. Die Befestigungseinrichtung mittels lösbarem Spannband 25 ermöglicht somit ein äußerst einfaches Auswechseln des Filtereinsatzes, wobei in vorteilhafter Weise die Montage der Schlauchleitungen zu den Anschlüssen am Deckel 13 entfallen kann, sodaß ebenfalls ein Verwechseln von Schlauchleitungen vermieden wird und Dichtheitsprobleme vermindert werden. Da auf den Deckel 13 keine axialen Kräfte wirken, eignet er sich besonders für eine Bauweise aus Kunststoff. Für eine einfache Bauweise bei wirkungsvoller Abdichtung ist es zweckmäßig, wenn die erste Dichtstelle 32 außerhalb des eigentlichen Spannbereichs der Befestigungseinrichtung 14 gelegt wird. Die Einrichtung 43 zur Kraftstoffrückführung kann besonders einfach, kostengünstig und raumsparend in der Aussparung 44 untergebracht werden.

Selbstverständlich sind an dem gezeigten Flüssigkeitsfilter Änderungen möglich, ohne vom Gedanken der Erfindung abzuweichen. Obwohl die Bauart mit Wickelelement besonders vorteilhaft ist, kann das Flüssigkeitsfilter als Filterelement auch einen Sterneinsatz aufweisen. Die vorgeschlagene Bauart eignet sich besonders bei Flüssigkeitsfilter, bei denen im Deckel zusätzliche Aufschaltgruppen angeordnet sind; das Filter kann jedoch auch ohne Einrichtung 43 zur Kraftstoffrückführung ausgebildet werden. Ebenso läßt sich das Flüssigkeitsfilter 10 so abwandeln, daß es keinen Wasserspeicherraum und keine Wasserablaßmöglichkeit aufweist. Der Deckel eignet sich aufgrund seiner Bauform auch zur Herstellung aus Druckguß. Ferner kann es zum Beispiel aus Platzgründen vorteilhaft sein, anstelle des gezeigten Hebel-Schnellverschlusses einen anderen lösbaren Verschluß zu wählen, zum Beispiel eine lösbare Schraubverbindung. Auch die Form des Spannbandes und der zugeordneten Wülste ist in gewissen Grenzen abwandelbar, ohne auf die Vorteile der lösbaren Befestigungseinrichtung 14 bei einem Filter zu verzichten.

## Ansprüche

1. Flüssigkeitsfilter mit einem in einem Gehäuse austauschbar angeordneten Filterelement, das zwischen einen Zulauf-Anschluß und einen Ablauf-Anschluß geschaltet ist und dessen Gehäuse aus einem die Anschlüsse aufweisenden Deckel und einem das Filterelement aufnehmenden, becherförmigen Gehäuseteil besteht, die durch eine Befestigungseinrichtung lösbar miteinander verbunden sind sowie mit einer den Innenraum des Gehäuses nach außen abgrenzenden ersten Dichtung zwischen Deckel und Gehäuseteil und einer Schmutz- und Reinseite voneinander trennenden zweiten Dichtung zwischen Deckel und Filterelement, wobei beide Dichtungen als radial wirkende Rundschnurdichtungen ausgeführt sind, dadurch gekennzeichnet, daß der Deckel (13) und das Gehäuseteil (12) jeweils einen aneinanderliegenden Ringwulst (18, 21) aufweisen und die Befestigungseinrichtung ein beide Ringwulste (18, 21) umfassendes, ringförmiges lösbares Spannband (15) aufweist.

2. Flüssigkeitsfilter nach Anspruch 1, dadurch gekennzeichnet, daß das Spannband (25) einen Schnellverschluß (26) aufweist.

3. Flüssigkeitsfilter nach Anspruch 1 oder 2, dadurch gekennzeichnet, daß die beiden Ringwulste (18, 21) außen schräge Begrenzungsflächen (23, 24) aufweisen und das Spannband (25) innen einen dazu passenden, im wesentlichen V-förmigen Querschnitt aufweist.

4. Flüssigkeitsfilter nach einem oder mehreren der Ansprüche 1 bis 3, dadurch gekennzeichnet, daß der Deckel (13) eine im wesentlichen scheibenförmige Deckplatte (19) aufweist, die an ihrem Außenumfang den Ringwulst (21) bildet, zum Gehäuseteil (12) hin zwei hülsenförmige Ringstege (28, 29) aufweist, mit denen die erste bzw. zweite Dichtstelle (34, 34) zusammenwirken und die auf der entgegengesetzten Außenseite (35) die Anschlüsse für Zulauf (37) und Ablauf (38) aufweist.

5. Flüssigkeitsfilter nach einem oder mehreren der Ansprüche 1 bis 4, dadurch gekennzeichnet, daß im Deckel (13) in einer im Bereich zwischen beiden Ringstegen (28, 29) liegenden Aussparung (44) eine Kraftstoffrückführungs-Einrichtung (43) angeordnet ist und der Deckel (13) außen zwei zusätzliche Anschlüsse (41, 42) aufweist.

6. Flüssigkeitsfilter nach einem oder mehreren der Ansprüche 1 bis 5, dadurch gekennzeichnet, daß das Filterelement ein axial durchströmtes Wickelelement (15) ist, zwischen dessen Mittelrohr (16) und dem inneren Ringsteg (29) am Deckel (13) die zweite radial wirkende Dichtstelle (34) angeordnet ist.

7. Flüssigkeitsfilter nach Anspruch 6, dadurch gekennzeichnet, daß das Wickelelement (15) an seiner vom Deckel (13) abgewandten Stirnseite von einer Abdeckkappe (45) dicht abgeschlossen ist, die den aus dem Wickelelement (15) austretenden Flüssigkeitsstrom in das Mittelrohr (16) umlenkt.

8. Flüssigkeitsfilter nach Anspruch 6 oder 7, dadurch gekennzeichnet, daß die Abdeckkappe (45) einen Wasserspeicherraum (48) bildet und einen Gewindestutzen (51) mit Ablaßschraube (49) aufweist und die Kappe (45) an ihrem äußeren Umfang radial gegen das Gehäuseteil (12) abgedichtet ist, wobei insbesondere der Dichtring (54) im Bereich des Gewindestutzens (51) liegt, der in eine topfförmige Ausformung (52) des Gehäuseteils (12) ragt.

9. Flüssigkeitsfilter einem oder mehreren der Ansprüche 1 bis 8, dadurch gekennzeichnet, daß der Deckel (13) aus Kunststoff besteht.

10. Flüssigkeitsfilter nach einem oder mehreren der Ansprüche 1 bis 9, dadurch gekennzeichnet, daß die erste Dichtstelle (32) außerhalb der von den Ringwulsten (18, 21) und dem Spannband (25) gebildeten Spannzone angeordnet ist.

FIG. 1

FIG. 2